# FASCICULE DE BREVET EUROPEEN

(11) **EP 0 826 946 B1**
(45) Date de publication et mention de la délivrance du brevet: **04.02.2004**
(21) Numéro de dépôt: 97401989.5
(22) Date de dépôt: 26.08.1997
(51) Int. Cl.: G01C 23/00

(54) **Procédé d'assistance au pilotage d'un aérodyne**
Verfahren zur Unterstützung des Piloten eines Flugzeuges
Method for assisting the piloting of an aircraft

(30) Priorité: 30.08.1996 FR 9610621
(43) Date de publication de la demande: 04.03.1998
(73) Titulaire: THALES AVIONICS S.A., 78141 Vélizy Villacoublay Cédex (FR)
(72) Inventeur: Deker, Guy, 94117 Arcueil Cedex (FR); Bomans, Muriel, 94117 Arcueil Cedex (FR)
(74) Mandataire: Guérin, Michel

(56) Documents cités:
- FR-A- 2 677 149
- FR-A- 2 694 104
- FR-A- 2 694 106
- US-A- 5 398 186

## Description

La présente invention concerne un procédé d'assistance au pilotage d'un aérodyne destiné plus particulièrement à faciliter les tâches du pilote, notamment en ce qui concerne le choix d'un plan de vol de déroutement.

Le pilotage d'un aéronef est facilité par des équipements informatiques embarqués qui sont constitués d'un ou plusieurs calculateurs et qui assurent diverses fonctions dont une dite " pilote automatique" permet le suivi automatique d'une trajectoire de consigne par exploitation des indications de positionnement des instruments de bord et actions sur les commandes de vol et une autre dite "calculateur de vol" ou "FMS" (sigle provenant de l'anglo-saxon : Flight Management System) permet d'alimenter le pilote automatique en consignes de suivi de trajectoires correspondant à un plan de vol préétabli. Ces équipements informatiques embarqués sont placés sous la maîtrise étroite de l'équipage par l'intermédiaire d'un terminal homme/machine avec clavier et écran dit "CDU" (sigle provenant de l'anglo-saxon : Control and Display Unit) souvent placé sur la console centrale du poste de pilotage.

Les équipements informatiques embarqués devenant de plus en plus performants, les fonctions qui leur sont confiées sont accrues de jour en jour.

Ils sont maintenant pourvus de mémoires de masse stockant, sous forme de bases de données consultables par l'équipage au travers du terminal CDU, un ensemble d'informations utiles à la conduite du vol, telles que les manuels de vol, des cartes de navigation, de la documentation sur les aéroports survolés, etc.., que l'on trouvait au préalable sous forme imprimée dans le poste de pilotage.

Rapidement, on a cherché, pour faciliter la tâche du pilote lorsqu'il doit décider, à la suite d'un événement inopiné, de modifier un plan de vol en cours de réalisation, à automatiser l'extraction de ces bases de données, de certaines informations jugées utiles, a priori, pour modifier un plan de vol en cours d'exécution et même à faire exploiter par les équipements informatiques du bord, les informations extraites pour en tirer, par confrontation avec la position instantanée de l'aéronef donnée par des capteurs embarqués, des propositions de modification de plan de vol communiquées sur demande au pilote qui peut retenir l'une d'entre elles ou les écarter pour suivre sa propre solution.
Par exemple, il est proposé dans le brevet américain US 5,398,186 de pourvoir le calculateur de vol FMS, en plus de ces éléments et programmes habituels, d'une base de données rassemblant des informations sur les localisations des terrains d'atterrissage situés dans la zone d'activité de l'aéronef et d'un programme spécifique d'assistance au déroutement assurant le calcul et l'affichage sur le terminal CDU, à la demande du pilote, de trois paramètres :
- la distance, par rapport à la position actuelle de l'aéronef, d'un terrain d'atterrissage de déroutement sélectionné au moyen du terminal CDU dans la base de données,
- la quantité de carburant nécessaire pour atteindre ce terrain de déroutement ou plutôt la quantité de carburant susceptible de rester dans l'aéronef à son arrivée sur ce terrain de déroutement, et
- l'heure prévisible d'arrivée sur ce terrain de déroutement,
cela pour deux trajets différents : le trajet direct et un trajet passant à la vertical du terrain d'atterrissage de destination du plan de vol initial. Une option de ce programme d'assistance au déroutement permet, toujours sur demande du pilote, de sélectionner les cinq terrains les plus proches de la position actuelle de l'aérodyne et d'afficher sur l'écran du terminal CDU, les informations relatives à ces cinq terrains d'atterrissage.

L'aide apportée par ce genre de programme d'assistance au déroutement se limite à une présentation d'informations sans réellement d'aide à la décision.

Il a été proposé par ailleurs des systèmes d'aide à la décision qui permettent d'élaborer une ou plusieurs solutions à un problème en calculant un grand nombre de solutions et en effectuant une sélection en fonction d'un ou plusieurs critères particuliers prédéterminés. Cependant, la solution identifiée par le système comme étant la meilleure ne correspond pas forcément au meilleur choix possible, et dans le contexte de l'aviation civile, le pilote doit pouvoir sélectionner lui-même en toute connaissance de cause la solution qui sera finalement suivie.

La présente invention a pour but de supprimer ces inconvénients et d'améliorer l'ergonomie de l'interface homme / machine. A cet effet, elle propose un procédé d'assistance au pilotage d'un aérodyne mis en oeuvre par un système comprenant un processeur, au moins un terminal de communication homme/machine à disposition d'un pilote, comportant un écran de visualisation et un organe de commande et de saisie, et des mémoires où sont stockées notamment toutes les informations utiles à la conduite d'un vol, le système étant connecté aux autres équipements électroniques embarqués à bord de l'aérodyne.

Selon l'invention, ce procédé est caractérisé en ce que, pour déterminer un nouveau plan de vol pour répondre à une situation nouvelle engendrée par un événement perturbateur, il comprend les étapes suivantes :
- la surveillance du contexte dans lequel se trouve l'aérodyne et l'interprétation de l'événement par le système et son processeur renseignés par les autres équipements de l'aérodyne et par le pilote au moyen de son terminal de communication homme/machine, pour déterminer les éventuelles actions correctives à entreprendre,
- l'analyse, par le système et son processeur, des possibilités de reconfiguration du plan de vol, qui correspondent aux actions correctives déterminées à l'étape précédente, en fonction d'un ensemble de critères prédéterminés et modifiables par le pilote au moyen du terminal de communication homme machine,
- l'élaboration, par le système et son processeur, des plans de vol solutions qui satisfont aux critères prédéterminés, et
- la présentation au pilote, par le système sur l'écran de visualisation de son terminal de communication homme machine, de ces plans de vol, en association avec les paramètres significatifs qui ont motivé leur élaboration.

Selon l'invention, les éventuelles actions correctives sont déterminées en fonction de l'événement et compte tenu du contexte dans lequel se trouve l'aérodyne.

Grâce à ces dispositions, le pilote peut déterminer pourquoi un plan de vol a été sélectionné par le système en tant que solution au problème particulier qui se pose du fait de l'arrivée de l'événement. Il peut donc choisir en toute connaissance de cause le plan de vol qui lui semble le mieux convenir à la situation rencontrée.

Plus précisément, le procédé est caractérisé par le fait que les étapes suivantes sont effectuées :
- réception par le processeur d'une information signalant l'événement perturbateur,
- détermination par le processeur d'une action corrective,
- affichage sur l'écran de visualisation de l'action corrective à entreprendre,
- calcul par le processeur des plans de vol solution scorrespondant à l'action corrective et répondant à un ensemble de critères prédéterminés et modifiables par le pilote, le calcul étant effectué à partir d'une base de données de navigation contenue dans les mémoires et des données fournies par les équipements embarqués,
- affichage sur l'écran de visualisation d'une carte de navigation,
- affichage sur la carte de navigation des plans de vol solution en association avec les critères qui ont motivé leur sélection en tant que solution,
- affichage sur demande d'informations détaillées d'un plan de vol désigné par le pilote parmi les plans de vol solution affichés sur la carte de navigation de l'écran de visualisation.

Les différentes actions correctives à effectuer à la suite de l'arrivée de l'événement perturbateur consistent en un déroutement (modification de l'aéroport de destination), une modification du plan de vol latéral, ou une modification du plan de vol vertical, l'événement correspondant à la détection d'un phénomène météorologique dangereux, ou d'une panne grave de l'aérodyne, ou encore d'un problème au niveau de l'aéroport de destination, du contrôle aérien, ou des passagers de l'aérodyne.

Dans le cas d'événements perturbateurs multiples, les actions correctives sont déterminées et traitées par ordre de priorité.

Avantageusement, le procédé comprend en outre la présentation au pilote du point limite du plan de vol actif pour activer le nouveau plan de vol, ainsi que du temps et de la distance jusqu'à ce point.

Selon une particularité de l'invention, le procédé comprend l'affichage des raisons pour lesquelles un plan de vol désigné préalablement par le pilote a été sélectionné en tant que solution, il comprend aussi l'affichage des raisons pour lesquelles un aéroport désigné préalablement a, ou n'a pas été sélectionné en tant que solution.

Selon une autre particularité de l'invention, le procédé comprend la présentation détaillée selon un second niveau de toutes les données prises en compte par le système pour l'examen de chaque solution.

Selon une autre particularité de l'invention, chaque plan de vol solution d'un déroutement est calculé en utilisant les segments de routes aériennes et en tenant compte des procédures d'approche et d'arrivée sur l'aéroport de déroutement correspondant.

Un mode de réalisation du dispositif selon l'invention sera décrit ci-après, à titre d'exemple non limitatif, avec référence aux dessins annexés dans lesquels :
La figure 1 représente schématiquement un système mettant en oeuvre le procédé selon l'invention ;
Les figures 2 à 4 illustrent le séquencement de différents écrans affichés sur le terminal du système ;

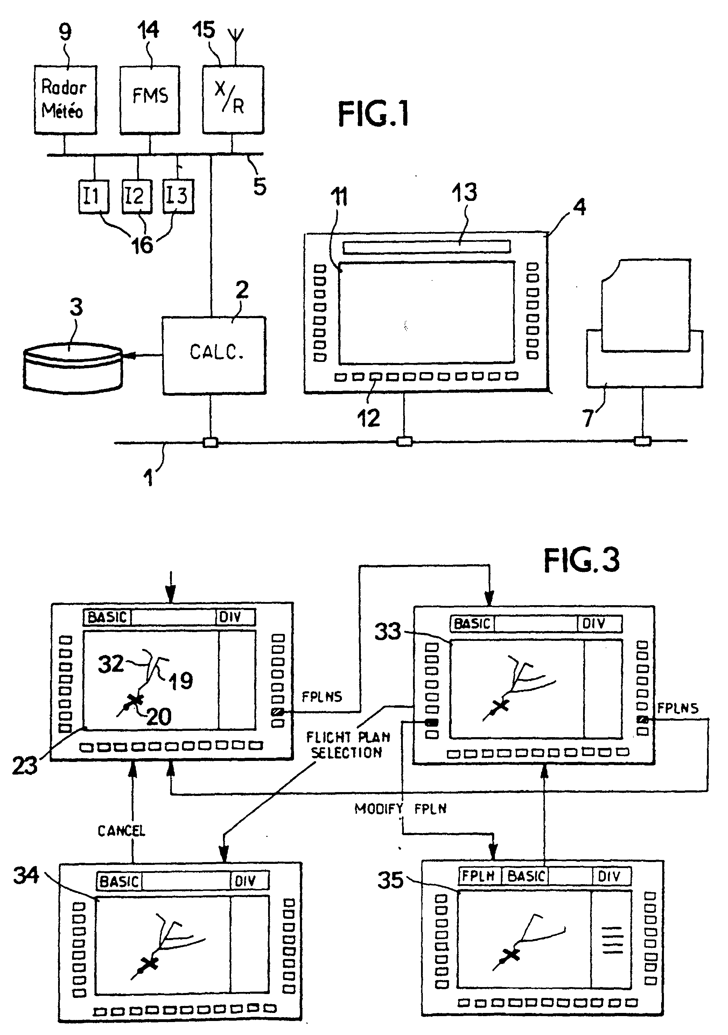

La figure 1 représente un système embarqué à bord d'un aérodyne comprenant un réseau local 1 auquel sont connectés :
- un calculateur 2 connecté à une mémoire de masse 3 dans laquelle sont stockées, par exemple sous la forme d'une base de données, l'ensemble des informations que l'on trouve normalement sous la forme d'imprimés dans le poste de pilotage d'un aérodyne,
- au moins un terminal de communication homme / machine 4 adapté à une utilisation dans le poste de pilotage d'un aérodyne où l'espace disponible est relativement réduit, et
- éventuellement une imprimante offrant au pilote la possibilité d'imprimer la page visualisée sur l'écran de visualisation du terminal 4.

Le calculateur 2 est en outre connecté par l'intermédiaire des bus avion 5 aux autres équipements électroniques installés à bord de l'aérodyne, tels que notamment :
- un radar météorologique 9 fournissant périodiquement des informations permettant de reconstituer le contour de zones météorologiques associées à un niveau de danger,
- un dispositif assurant la conduite automatique du vol (FMS) 14 selon un plan de vol détaillé préétabli,
- un dispositif de transmission radio de données numériques 15, par exemple data-link, et
- des instruments de navigation 16.

Les informations stockées dans la mémoire de masse 3 concernent par exemple :
- les manuels de vol,
- les cartes de navigation relatives aux zones survolées, les routes aériennes,
- la documentation concernant chaque aéroport de la zone survolée, incluant notamment les procédures de décollage et d'atterrissage, les procédures d'approche et celles d'arrivée,
- les manuels d'opérations, de description de l'équipement et de maintenance de l'aérodyne, ...

La mémoire de masse mémorise également une base de règles qui associe chaque événement nécessitant une modification du plan de vol à une ou plusieurs actions correctives à appliquer au plan de vol courant.

Les actions correctives éventuelles sont déterminées par la connaissance de l'événement et du contexte courant dans lequel se trouve l'aérodyne. L'événement est interprété dans le cadre d'une surveillance du contexte.

Le terminal 4 comprend un écran de visualisation 11 rectangulaire en mode paysage et un organe de commande comprenant des touches 12 réparties tout autour de l'écran 11, les touches à gauche de l'écran étant reconfigurables en fonction de la page affichée à l'écran, et donnant accès aux fonctions de base du système, les touches inférieures permettant la gestion de l'affichage, les touches de droite permettant l'affichage, en surimpression sur la carte de navigation de la zone survolée, des données utiles à la navigation (aéroports, balises, ...), et les touches supérieures donnant accès aux fonctions de base déclenchées précédemment.

Les touches supérieures sont avantageusement constituées par un bandeau 13 comportant un afficheur sur lequel vient se superposer une surface sensible transparente permettant de détecter la position du doigt de l'opérateur. L'afficheur permet d'indiquer les libellés des touches reconfigurables correspondant aux pages appelantes dans l'ordre d'appel, ces touches permettant ainsi de revenir rapidement sur ces dernières.

L'organe de commande peut également comprendre une surface tactile transparente disposée sur l'écran 11.

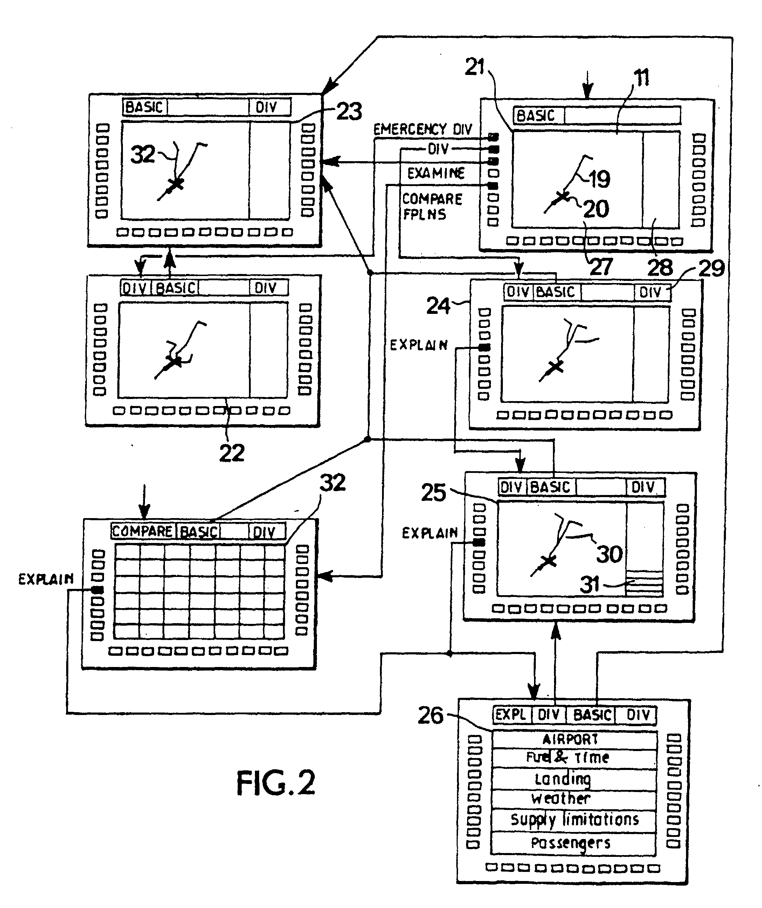

La figure 2 représente le séquencement de différentes pages affichées à l'écran 11 au cours du dialogue qui se déroule à la suite de l'activation de la fonction de déroutement qui effectue la détermination de nouveaux plans de vol vers des aéroports de déroutement, lorsque celui qui a été prévu initialement n'est plus accessible par l'aérodyne.

Une telle situation se produit lors de l'arrivée des événements suivants, répertoriés dans la base de règles stockée dans la mémoire de masse 3 :
- les conditions météorologiques de la zone où se trouve l'aéroport de destination sont trop mauvaises pour permettre un atterrissage dans des conditions de sécurité suffisantes,
- l'aéroport de destination est saturé ou fermé,
- l'infrastructure de l'aéroport de destination n'est plus adéquate (rupture d'approvisionnement, réparation impossible, ...), alors qu'une procédure de maintenance ou de réparation est nécessaire,
- le contrôle aérien dans la zone de l'aéroport de destination est hors service ou saturé,
- une panne grave ou affectant l'autonomie de l'aérodyne a été détectée, et
- un problème concernant les passagers est apparu (piraterie, urgence médicale, alerte à la bombe, ...).

Ces événements sont introduits dans le système par l'intermédiaire soit de la liaison data-link 15 avec le sol pour les problèmes concernant l'aéroport de destination, le contrôle aérien ou encore la météorologie, soit du radar météorologique 9 pour les problèmes météorologiques, soit du FMS ou des autres équipements électroniques de l'aérodyne pour les pannes. Tous ces événements peuvent également être introduits dans le système par le pilote qui peut en être informé directement, notamment en cas de problèmes concernant les passagers, ou par une transmission radio vocale.

Lorsque le système est activé, l'écran 21 montré sur la figure 2 apparaît sur le terminal 4. Cet écran comprend deux fenêtres, à savoir une fenêtre graphique 27 située dans la partie gauche de l'écran, dans laquelle est affichée l'image de la carte de navigation de la zone survolée par l'aérodyne, et une fenêtre textuelle 28 située dans la partie droite de l'écran 11.

La fenêtre textuelle 28 fournit un certain nombre de paramètres concernant le plan de vol suivi par l'aérodyne, ainsi que le plan de vol de dégagement prévu initialement pour le cas où l'aéroport de destination ne serait pas accessible. Ces paramètres concernent par exemple, la distance restant à parcourir, le temps, le volume de carburant restant à la destination, ...

Cette fenêtre comprend également une partie réservée à l'affichage des messages du système, indiquant par exemple l'arrivée d'un événement inattendu.

Dans la fenêtre graphique 27, sont également affichées en surimpression sur l'image de la carte de navigation donnant les contours géographiques de la zone survolée :
- un symbole graphique 20 représentant l'aérodyne, indiquant la position courante de l'aérodyne relativement à la portion de carte affichée, cette position étant fournie au calculateur 2 par les instruments de radionavigation 16,
- le plan de vol suivi par l'aérodyne indiqué par une ligne 19 formée d'une succession de segments de droite, et
- la position des aéroports, et éventuellement leur nom si l'échelle de représentation de la carte le permet.

En outre, à l'aide de commandes appropriées, le pilote peut demander l'affichage en surimpression sur la carte de symboles représentant certains objets utiles pour la navigation aérienne, comme par exemple les balises de radionavigation, les aéroports, les routes aériennes, les zones et fréquences de contrôle, les zones à accès restreint avec leurs périodes d'accès, ou encore les cartes météo.

Si à partir de l'écran 21, le pilote appuie sur la touche DIV de détermination d'un plan de vol vers un aéroport de déroutement, l'écran 24 est affiché et le pilote est invité à définir la cause du déroutement si celle-ci n'est pas connue du calculateur 2, ainsi que les critères de sélection du nouveau plan de vol. Cet écran 24 est également affiché lorsque le calculateur a reçu, par l'intermédiaire des bus avion 5, un message relatif à un événement nécessitant un déroutement, le message étant alors affiché dans la zone de message de la fenêtre textuelle 28 de l'écran 24.
La fenêtre graphique montre, en plus des objets affichés sur l'écran 21, les limites de la zone de recherche d'un aéroport de déroutement. Cette zone est par exemple circulaire et centrée par défaut sur l'aéroport de destination si le déroutement n'est pas urgent, il est alors standard - et dans le cas contraire, (voir plus loin la description de la touche EMERGENCY DIV) sur le prochain point de passage (Way Point) du plan de vol actif ou sur la position courante de l'aérodyne. Bien entendu, le centre de cette zone et son rayon peuvent être modifiés.
En particulier, le rayon de cette zone peut croître jusqu'à trouver un minimum de solutions (aéroports accessibles), sauf si cette extension se révèle impossible à réaliser par l'aérodyne compte tenu de son autonomie en carburant et de son profil de vol.

Le calculateur 2 détermine alors les différents plans de vol solutions (un plan de vol solution comporte de préférence des segments de routes aériennes avec un niveau de vol et une vitesse optimale) en appliquant au plan de vol courant les actions correctives associées à l'événement perturbateur qui s'est produit, fournies par la base de règles. Dans le cas présent, l'action corrective consiste en un déroutement vers un autre aéroport. Le calculateur procède donc à l'élaboration des différents plans de vol menant à chaque aéroport situé dans la zone de recherche, compte tenu des critères de sélection et d'optimisation indiqués dans la partie textuelle 28 de l'écran.

Dans le cas de causes multiples de modification du plan de vol, les actions correctives sont classées et traitées dans un ordre de priorité prédéterminé.

Outre les délimitations de la zone de recherche, les critères de sélection d'aéroport de déroutement, classés suivant un ordre prédéterminé en fonction de leur importance, sont les suivants :
- l'autonomie de carburant,
- la possibilité d'atterrir sur l'aéroport de déroutement compte tenu de son état de saturation, de l'état de ses pistes, et de la météorologie,
- la possibilité de redécoller (infrastructures, possibilité de réparer, ...),
- l'acheminement des passagers ou le traitement du fret.

Et les plans de vol pour rejoindre les différents aéroports sélectionnés sont élaborés par le calculateur 2 en tenant compte des critères d'optimisation.

Le calculateur 2 classe ensuite dans une liste les différentes solutions trouvées en fonction d'un ou plusieurs critères d'optimisation, tels que la consommation de carburant, ou la durée du vol.

Lorsque le calcul est terminé, un indicateur DIV 29 est affiché dans la partie droite du bandeau 13 montrant qu'au moins un plan de vol de déroutement répondant aux critères de sélection et d'optimisation a été calculé. Ces plans de vol solutions sont affichés sur la carte de navigation dans la fenêtre graphique, par exemple en traits interrompus à partir du point de sortie du plan de vol initialement prévu.

Les plans de vol solutions sont de préférence calculés en utilisant les segments de routes aériennes, en tenant compte des contraintes de ces segments (notamment les altitudes minimale et maximale, les sens uniques) et en tenant aussi compte des procédures d'arrivée et d'approche en vigueur pour les aéroports de déroutement sélectionnés. Les plans de vol de déroutement sont calculés de préférence avec une altitude optimale et une vitesse optimale dépendant des performances de l'avion, et des critères d'optimisation prédéterminés ou choisis.

Chacun de ces plans de vol solutions est associé à un point de décision correspondant au point limite du plan de vol initial où doit intervenir la décision du pilote d'activer ou non le nouveau plan de vol. Ce point de décision est associé à une alarme et le temps et la distance jusqu'à ce point sont affichés. La position de ce point est déterminée en fonction de paramètres par défaut prédéterminés, mais peut être modifiée par le pilote.

Bien entendu, le pilote peut modifier les critères de sélection et d'optimisation, en ajouter ou en supprimer, et déclencher un nouveau calcul.

La fenêtre textuelle 28 indique notamment le type et la cause du déroutement, (où le type du déroutement est par exemple standard ou urgent, et la cause correspond à l'événement déclenchant ce déroutement), le centre et le rayon de la zone de recherche, les critères d'optimisation, le nombre de solutions trouvées, et pour chaque solution, le nom de l'aéroport de déroutement, le nom du point de sortie du plan de vol actif vers le nouveau plan de vol, et la valeur du critère d'optimisation.

Dans cet état, le pilote peut supprimer l'un des plans de vol solutions après l'avoir sélectionné.

Le pilote peut également demander des explications sur un plan de vol ou un aéroport en appuyant sur la touche EXPLAIN. Le pilote est alors invité à désigner au moyen d'un curseur déplaçable sur l'écran, un aéroport quelconque 30 ou un tronçon de plan de vol faisant partie des plans de vol de déroutement envisagés précédemment par le calculateur 2 (écran 25). Le calculateur affiche alors dans la zone de message 31 pourquoi l'objet désigné a ou n'a pas été sélectionné en tant que solution possible. Si l'objet désigné est un tronçon de plan de vol, le calculateur affiche pourquoi ce plan de vol est une solution possible au problème soulevé par l'événement perturbateur. Et si l'objet désigné est un aéroport celui-ci est soit un aéroport solution c'est-à-dire correspondant à l'aéroport d'atterrissage d'un plan de vol solution, soit un aéroport non retenu lors de l'opération d'élaboration des plans de vol solutions; et le calculateur affiche pourquoi l'aéroport désigné a ou n'a pas été sélectionné pour la détermination des solutions possibles.
En appuyant de nouveau sur la touche EXPLAIN, la fenêtre textuelle 28 fournit des informations selon un premier niveau de détail concernant l'objet désigné, et notamment les variables significatives qui ont motivé la sélection de l'objet désigné (plan de vol ou aéroport) du plan de vol en tant que solution ou non.

A partir de l'écran 25, le pilote peut demander des informations encore plus détaillées, selon un second niveau, en appuyant de nouveau sur la touche EXPLAIN. Le calculateur 2 affiche alors en plein écran, la page 26 qui permet d'accéder à toutes les informations disponibles concernant l'objet désigné par exemple à l'aide d'un menu sur cette page 26 dont la sélection d'un item donne accès en plein écran aux données textuelles souhaitées.

Les informations disponibles sont par exemple les informations sur les conditions d'atterrissage (état des pistes, prédictions et performances d'atterrisage, limitations opérationnelles, minima météorologiques et conditions météorologiques actuelles et prévisibles), les contraintes réglementaires (comme par exemple la catégorie d'approche autorisée, la masse de l'aérodyne à l'atterrissage, la distance d'atterrissage). Ces données affichées sont mises à jour automatiquement par liaison 15 data-link.

Le pilote peut aussi demander la page de comparaison des plans de vol qui ont été calculés et sélectionnés précédemment en tant que solution, en appuyant sur la touche COMPARE FPLN. Cette touche permet d'afficher en plein écran, un tableau comparatif 32 du plan de vol actif suivi par l'aérodyne avec les plans de vol solutions qui sont avantageusement classés dans un ordre correspondant au critère d'optimisation prédéterminé ou choisi. Ce tableau indique pour chaque plan de vol, la liste des points de passage et les prédictions associées, c'est-à-dire le niveau de vol et la vitesse de survol, les données concernant le point de sortie du plan de vol initial (le nom du point de sortie, sa distance par rapport à la position courante de l'aérodyne et le temps pour atteindre ce point), ainsi que le volume de carburant restant estimé à destination, l'heure d'arrivée estimée et la distance de l'aéroport de destination, le retard dû au trafic, et des données concernant le vent, en particulier, le vent moyen sur la route et le vent maximal que l'avion peut supporter sans problème de carburant à l'arrivée.

A partir de cet écran 32, le pilote peut appuyer sur la touche EXPLAIN afin d'obtenir des informations plus détaillées, sur tel ou tel élément qu'il doit sélectionner dans le tableau comparatif.

Dans n'importe quel état, la touche ERMERGENCY DIV est toujours activable, celle-ci permettant d'activer la recherche d'un aéroport de déroutement en cas d'urgence. Si le pilote appuie sur cette touche, l'écran 22 apparaît, et le calculateur 2 effectue la recherche d'un ou plusieurs aéroports de déroutement d'urgence, c'est-à-dire les plus proches possible de la position courante de l'aérodyne. La proximité est un critère supplémentaire de sélection. Une fois cette recherche terminée, le calculateur affiche sur la carte les plans de vol qu'il a déterminé, ainsi que des explications dans la fenêtre textuelle 28, sur le premier plan de vol solution sélectionné. Les plans de vol solutions répondent aux critères de sélection et d'optimisation en vigueur.

A partir des écrans 22, 24, 25, 26 et 32 le pilote peut, en appuyant sur la touche BASIC du bandeau 13, revenir à l'écran 23 qui correspond à l'écran initial, mais qui tient compte du fait qu'un calcul de déroutement à été effectué, la fenêtre graphique 27 montrant en plus le premier plan de vol de déroutement 32 de la liste des plans de vol solutions, tandis que la partie textuelle 28 donne les paramètres significatifs permettant de comparer le plan de vol actif avec le plan de vol de déroutement.

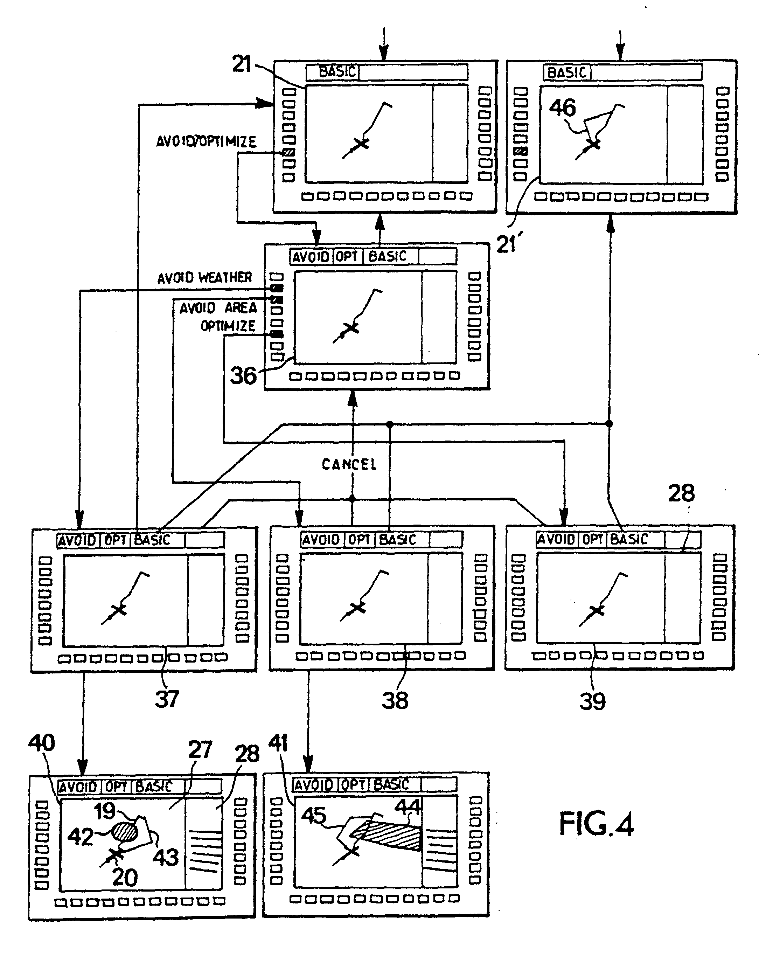

A partir de l'écran 23, le pilote a la possibilité de modifier un plan de vol en appuyant sur la touche FPLNS, ce qui déclenche un dialogue dont le séquencement est illustré sur la figure 3. L'activation de cette touche provoque l'affichage par le calculateur 2 de tous les plans de vol sélectionnés précédemment (écran 33). A partir de cet écran, le pilote peut sélectionner un plan de vol sur la fenêtre graphique, ce qui entraîne l'affichage de l'écran 34 donnant dans la fenêtre textuelle des informations permettant la comparaison entre le plan de vol actif et le plan de vol sélectionné. Le pilote peut également appuyer sur la touche MODIFY FPLN. Il est alors invité à sélectionner le plan de vol qu'il souhaite modifier, cette sélection entraînant l'affichage de l'écran 35.

La fenêtre graphique de l'écran 35 montre le plan de vol actif et le plan de vol sélectionné, tandis que la fenêtre textuelle donne les informations modifiables concernant le plan de vol sélectionné pour modification.
Ces informations sont par exemple le niveau de vol que le pilote peut modifier pour profiter d'un vent favorable.

A partir de l'écran 21, le pilote a aussi la possibilité, grâce à la touche AVOID/OPTIMIZE, de déclencher différentes fonctions d'évitement de zone et d'optimisation du plan de vol vertical (figure 4).
Cette touche permet d'accéder à l'écran 36, dans lequel certaines touches ont été reconfigurées de manière à permettre la sélection d'une de ces fonctions.

Si, à partir de l'écran 36, le pilote sélectionne la fonction d'évitement d'une zone météorologique (par la touche AVOID WEATHER), l'écran 37 est affiché, dans lequel la fenêtre graphique montre les zones météorologiques dont les contours ont été identifiés par le radar météorologique 9, ou bien transmis par la liaison data-link.
De même que l'écran 24 de détermination d'un plan de vol peut être affiché sur demande du pilote ou sur réception par le calculateur d'un événement correspondant, cet écran 37 affichable sur demande du pilote est également affiché lorsque le calculateur a reçu un message relatif à un événement nécessitant un évitement de zone météorologique.
La sélection d'une zone dans la fenêtre graphique provoque le lancement du calcul d'un plan de vol d'évitement vertical ou latéral selon le type de la zone météorologique sélectionnée, et l'affichage de l'écran 40 montrant dans la fenêtre graphique 27 les contours de la zone sélectionnée 42 par rapport à la position courante de l'aérodyne 20 et le plan de vol actif 19, ainsi que le plan de vol d'évitement 43 de la zone 42. La fenêtre textuelle 28 fournit le type (évitement latéral ou évitement vertical) et la cause (zone météorologique) de modification du plan de vol, le point et l'angle de sortie du plan de vol actif, la marge d'évitement, le point de retour au plan de vol actif, les paramètres de prédiction du plan de vol actif et du plan de vol d'évitement, ainsi que les paramètres modifiables du nouveau plan de vol.

A partir de l'écran 36, le pilote peut également, à l'aide de la touche AVOID AREA, activer la fonction d'évitement d'une zone à accès réglementé, ce qui permet d'afficher l'écran 38 montrant sur la carte affichée les contours des zones en question.
L'affichage de l'écran 38 peut également s'effectuer lorsque le calculateur a reçu un message relatif à un événement nécessitant un évitement d'une zone à accès réglementé.
La sélection par le pilote d'une zone permet de déclencher le calcul d'évitement de la zone par le calculateur 2, et d'afficher l'écran 41 montrant la position de l'aérodyne 20, le plan de vol actif 19, les contours de la zone sélectionnée 44, ainsi que le plan de vol d'évitement 45 qui vient d'être calculé. Comme pour l'écran 37, la fenêtre textuelle 28 donne les valeurs des paramètres modifiables du plan de vol d'évitement. Et dans le cas de l'écran 38 le type et la cause de modification du plan de vol sont respectivement un évitement latéral et une zone fixe.

La zone à éviter peut également être dessinée par le pilote directement sur la carte affichée dans la fenêtre graphique 27.

A partir de l'écran 36, le pilote peut aussi activer la fonction d'optimisation du plan de vol vertical (à l'aide de la touche OPTIMIZE), ce qui provoque l'affichage de l'écran 39 donnant accès aux niveaux de vol modifiables du plan de vol dans la fenêtre textuelle 28. L'écran 39 peut également s'afficher sur réception par le calculateur d'un événement nécessitant l'optimisation du plan de vol vertical.

L'activation de la touche BASIC dans le bandeau 13 permet, à partir des écrans 36 à 41, de retourner à l'écran 21 si aucun plan de vol d'évitement ou plan de vol modifié n'a été validé, et à l'écran 21' dans le cas contraire. Cet écran 21' fournit, en plus des éléments affichés dans l'écran 21, le nouveau plan de vol 46 qui a été validé.

Il est à noter que la fonction EXPLAIN décrite précédemment est accessible à partir des écrans 21' et 36 à 41, pour fournir des explications sur toute information calculée par le calculateur 2 et sélectionnée à cet effet.

Après validation des modifications effectuées au niveau des écrans 35, 39, 40 et 41, le calculateur 2 calcule et met à jour les paramètres de prédiction affichés.

Par ailleurs, le calculateur 2 prend en compte les différentes informations qu'il reçoit des autres équipements 9, 14, 15, 16 de bord, pour mettre à jour :
- la position courante de l'aérodyne,
- les données concernant le déroulement du vol,
- les données météorologiques affichées,
- les paramètres concernant les plans de vol solutions calculés,
- et éventuellement la liste des solutions si certains plans de vol de la liste sont devenus non valides, ou si certains plans de vol non sélectionnés deviennent valides.

Lorsqu'un nouveau plan de vol a été validé par le pilote, une touche du terminal 4 permet de commander l'envoi de ce nouveau plan de vol par la liaison data-link 15 vers la station de contrôle aérien, et vers le système de contrôle du vol FMS 14 assurant le pilotage autiomatique de l'aérodyne.

## Revendications

1. Procédé d'assistance au pilotage d'un aérodyne mis en oeuvre par un système comprenant un processeur (2), au moins un terminal de communication homme/machine (4) à disposition d'un pilote, comportant un écran de visualisation (11) et un organe de commande et de saisie (12), et des mémoires (3) où sont stockées notamment toutes les informations utiles à la conduite d'un vol, le système étant connecté aux autres équipements électroniques (9, 14, 15, 16) embarqués à bord de l'aérodyne,
**caractérisé en ce que**, pour déterminer un nouveau plan de vol pour répondre à une situation nouvelle engendrée par un événement perturbateur, il comprend les étapes suivantes :
- la surveillance du contexte dans lequel se trouve l'aérodyne et l'interprétation de l'événement par le système et son processeur (2) renseignés par les autres équipements (9, 14, 15, 16) de l'aéronef et par le pilote au moyen de son terminal de communication homme machine (4), pour déterminer les éventuelles actions correctives à entreprendre,
- l'analyse, par le système et son processeur (2), des possibilités de reconfiguration du plan de vol, qui correspondent aux actions correctives déterminées à l'étape précédente, en fonction d'un ensemble de critères prédéterminés et modifiables par le pilote au moyen du terminal de communication homme machine (4),
- l'élaboration, par le système et son processeur (2), des plans de vol solutions qui satisfont aux critères prédéterminés, et
- la présentation au pilote, par le système sur l'écran de visualisation (11 ) de son terminal de communication homme/machine (4), de ces plans de vol solutions, en association avec les paramètres significatifs qui ont motivé leur élaboration.

2. Procédé selon la revendication 1, **caractérisé par le fait que** les étapes suivantes sont effectuées :
- réception par le processeur (2) d'une information signalant l'événement perturbateur,
- détermination par le processeur (2) d'une action corrective,
- affichage sur l'écran de visualisation (11) de l'action corrective à entreprendre,
- calcul par le processeur (2) des plans de vol solutions correspondant à l'action corrective et répondant à un ensemble de critères prédéterminés et modifiables par le pilote, le calcul étant effectué à partir d'une base de données de navigation contenue dans les mémoires (3) et des données fournies par les équipements embarqués,
- affichage sur l'écran de visualisation (11) d'une carte de navigation,
- affichage sur la carte de navigation des plans de vol solutions en association avec les critères qui ont motivé leur sélection en tant que solution,
- affichage sur demande d'informations détaillées d'un plan de vol désigné par le pilote parmi les plans de vol solutions affichés sur la carte de navigation de l'écran (11).

3. Procédé selon la revendication 1,
**caractérisé en ce que** les actions correctives consistent en un déroutement, c'est-à-dire un changement de l'aéroport de destination, associé à une modification du plan de vol latéral, et une éventuelle modification du profil de vol vertical, l'événement correspondant à la détection d'un phénomène météorologique dangereux, ou d'une panne grave de l'aérodyne, ou encore d'un problème au niveau de l'aéroport de destination, du contrôle aérien, ou des passagers de l'aérodyne.

4. Procédé selon la revendication 2 ou 3,
**caractérisé en ce qu'**il comprend en outre l'affichage selon un premier niveau de détail des paramètres significatifs qui ont déterminé la sélection ou non en tant que solution d'un plan de vol, ou d'un aéroport, désigné préalablement par le pilote sur la présentation des plans de vol solutions.

5. Procédé selon la revendication 4,
**caractérisé en ce qu'**il comprend en outre l'affichage selon un second niveau de détail de toutes les informations concernant un aéroport, désigné préalablement par le pilote.

6. Procédé selon l'une des revendications précédentes,
**caractérisé en ce qu'**il comprend en outre la présentation selon un second niveau de toutes les données prises en compte par le système pour la détermination des plans de vol solutions.

7. Procédé selon l'une des revendications précédentes,
**caractérisé en ce qu'**il comprend la mise à jour en temps réel des plans de vol solutions en fonction des informations fournies par les équipements de bord ou provenant du sol.

8. Procédé selon l'une des revendications précédentes, **caractérisé en ce que** chaque plan de vol solution d'un déroutement est calculé en utilisant les segments de routes aériennes et en tenant compte des procédures d'approche et d'arrivée sur l'aéroport de déroutement correspondant.

9. Procédé selon l'une des revendications précédentes,
**caractérisé en ce qu'**il comprend en outre, la présentation au pilote du point de décision correspondant au point limite du plan de vol actif pour activer le nouveau plan de vol, ainsi que du temps et de la distance jusqu'à ce point.

10. Procédé selon l'une des revendications précédentes,
**caractérisé en ce qu'**en cas d'événements perturbateurs multiples, les actions correctives correspondantes sont déterminées et traitées par ordre de priorité.

11. Procédé selon l'une des revendications précédentes,
**caractérisé en ce que** l'analyse des plans de vol de déroutement est limitée aux aéroports de déroutement qui se trouvent dans une zone de recherche prédéfinie dont la position et l'étendue sont modifiables par le pilote.

12. Procédé selon la revendication 11,
**caractérisé en ce que** la position et l'étendue de la zone de recherche prédéfinie dépendent des actions correctives.

13. Procédé selon l'une des revendications précédentes,
**caractérisé en ce qu'**il comprend le classement des plans de vol solutions en fonction d'au moins un critère d'optimisation.

14. Procédé selon l'une des revendications précédentes,
**caractérisé en ce qu'**il comprend l'affichage d'un tableau comparatif (32) comprenant les valeurs de paramètres significatifs du plan de vol actif et des plans de vol solutions.

15. Procédé selon l'une des revendications précédentes,
**caractérisé en ce qu'**il comprend la prise en compte par l'organe de commande de modifications des paramètres d'un plan de vol solution, lesquelles modifications sont introduites par le pilote.

16. Procédé selon l'une des revendications précédentes,
**caractérisé en ce qu'**il comprend la prise en compte par le l'organe de commande de suppression d'un des plans de vol solutions, laquelle suppression est introduite par le pilote.

17. Procédé selon l'une des revendications précédentes,
**caractérisé en ce qu'**il comprend l'envoi par le système d'un plan de vol solution validé par le pilote à un dispositif de pilotage automatique (14) pour qu'il soit suivi par ce dernier.

## Claims

1. Method for assisting the piloting of an aircraft implemented by a system comprising a processor (2), at least one man/machine communication terminal (4) available to a pilot, comprising a viewing screen (11) and a control and input member (12), and memories (3) wherein are stored in particular all the useful information for the conduct of a flight, the system being connected to the other items of electronic equipment (9, 14, 15, 16) carried on board the aircraft,
**characterized in that**, to determine a new flight plan so as to respond to a new situation brought about by a disturbing event, it comprises the following steps:
- the monitoring of the context in which the aircraft is situated and the interpretation of the event by the system and its processor (2) which are advised by the other items of equipment (9, 14, 15, 16) of the aircraft and by the pilot by means of his man/machine communication terminal (4), so as to determine the corrective actions to be undertaken,
- the analysis, by the system and its processor (2), of the possibilities of reconfiguration of the flight plan, which correspond to the corrective actions determined in the previous step, as a function of a set of predetermined criteria which can be modified by the pilot by means of the man/machine communication terminal (4),
- the formulation, by the system and its processor (2), of the solution flight plans which satisfy the predetermined criteria, and
- the presentation to the pilot, by the system on the viewing screen (11) of his man/machine communication terminal (4), of these solution flight plans, in association with the significant parameters which motivated their formulation.

2. Method according to Claim 1, **characterized in that** the following steps are performed:
- reception by the processor (2) of an information item signalling the disturbing event,
- determination by the processor (2) of a corrective action,
- displaying on the viewing screen (11) of the corrective action to be undertaken,
- calculation by the processor (2) of the solution flight plans corresponding to the corrective action and responding to a set of predetermined criteria which can be modified by the pilot, the calculation being performed using a navigation database contained in the memories (3) and data supplied by the onboard equipment,
- displaying on the viewing screen (11) of a navigation chart,
- displaying on the navigation chart of the solution flight plans in association with the criteria which motivated their selection as solution,
- displaying, on request, of detailed information of a flight plan designated by the pilot from among the solution flight plans displayed on the navigation chart of the screen.

3. Method according to Claim 1,
**characterised in that** the corrective actions consist of a diversion, that is to say a change of destination airport, associated with a modification of the lateral flight plan, and a possible modification of the vertical flight profile, the event corresponding to the detection of a dangerous meteorological phenomenon, or of a serious fault with the aircraft, or else of a problem with regard to the destination airport, the air traffic control, or the passengers of the aircraft.

4. Method according to Claim 2 or 3,
**characterized in that** it furthermore comprises the displaying according to a first level of detail of the significant parameters which have determined the selection or otherwise as solution of a flight plan, or of an airport, designated previously by the pilot on the presentation of the solution flight plans.

5. Method according to Claim 4,
**characterized in that** it furthermore comprises the displaying according to a second level of detail of all the information relating to an airport, designated previously by the pilot.

6. Method according to one of the preceding claims,
**characterized in that** it furthermore comprises the presentation according to a second level of all the data taken into account by the system for the determination of the solution flight plans.

7. Method according to one of the preceding claims,
**characterized in that** it comprises a real-time updating of the solution flight plans as a function of the information supplied by the on-board equipment or originating from the ground.

8. Method according to one of the preceding claims,
**characterized in that** each solution flight plan of a diversion is calculated by using the segments of airways and by taking account of the procedures for approach and arrival at the corresponding diversion airport.

9. Method according to one of the preceding claims,
**characterized in that** it furthermore comprises the presentation to the pilot of the decision point corresponding to the limit point of the active flight plan so as to activate the new flight plan, as well as of the time and of the distance up to this point.

10. Method according to one of the preceding claims,
**characterized in that** should there be multiple disturbing events, the corresponding corrective actions are determined and processed in order of priority.

11. Method according to one of the preceding claims,
**characterized in that** the analysis of the diversion flight plans is limited to the diversion airports which are situated in a predefined search zone whose position and extent can be modified by the pilot.

12. Method according to Claim 11,
**characterized in that** the position and the extent of the predefined search zone depend on the corrective actions.

13. Method according to one of the preceding claims,
**characterized in that** it comprises the ranking of the solution flight plans as a function of at least one optimization criterion.

14. Method according to one of the preceding claims,
**characterized in that** it comprises the displaying of a comparative table (32) comprising the values of significant parameters of the active flight plan and of the solution flight plans.

15. Method according to one of the preceding claims,
**characterized in that** it comprises the taking into account by the control member of modifications of the parameters of a solution flight plan, which modifications are introduced by the pilot.

16. Method according to one of the preceding claims,
**characterized in that** it comprises the taking into account by the control member of deletion of one of the solution flight plans, which deletion is introduced by the pilot.

17. Method according to one of the preceding claims,
**characterized in that** it comprises the despatching by the system of a solution flight plan validated by the pilot to an automatic piloting device (14) so that it is tracked by the latter.

## Patentansprüche

1. Verfahren zur Unterstützung des Piloten eines Flugzeugs mithilfe eines Systems mit einem Prozessor, mindestens einem Mensch/Maschine-Terminal (4) zur Verfügung eines Piloten, das einen Bildschirm (11) und einen Steuer- und Dateneingabeorgan (12) enthält, sowie mit Speichern, in denen insbesondere alle für den Piloten nützlichen Informationen gespeichert sind, wobei das System an die weiteren elektronische Einrichtungen (9, 14, 15, 16) an Bord des Flugzeugs angeschlossen ist, **dadurch gekennzeichnet, daß** zur Bestimmung eines neuen Flugplans unter Berücksichtigung einer neuen durch ein Störereignis erzeugten Situation das Verfahren folgende Schritte aufweist:
- die Überwachung des Kontexts, in dem sich das Flugzeug befindet, und die Interpretation des Ereignisses durch das System und seinen Prozessor (2), die von den anderen Einrichtungen (9, 14, 15, 16) des Flugzeugs und vom Pilot über sein Mensch/Maschine-Terminal informiert werden, um eventuell einzuleitende Korrekturaktionen zu bestimmen,
- die Analyse der Möglichkeiten der Rekonfiguration des Flugplans durch das System und seinen Prozessor (2), die den im vorhergehenden Schritt festgelegten bestimmten Korrekturaktionen abhängig von einer Gruppe von vorbestimmten und durch den Pilot mithilfe des Terminals (4) veränderbaren Kriterien entsprechen,
- die Erarbeitung der möglichen Flugpläne, die die vorbestimmten Kriterien erfüllen, durch das System und seinen Prozessor (2),
- und die Anzeige dieser möglichen Flugpläne in Verbindung mit den signifikanten Parametern, die zu ihrer Erarbeitung geführt haben, durch das System auf dem Bildschirm (11) des Terminals (4).

2. Verfahren nach Anspruch 1, **dadurch gekennzeichnet, daß** die folgenden Schritte durchgeführt werden:
- der Prozessor (2) empfängt eine Information, die ein Störereignis meldet;
- der Prozessor (2) bestimmt eine Korrekturaktion;
- auf dem Bildschirm (11) wird die durchzuführende Korrekturaktion angezeigt;
- der Prozessor (2) berechnet die möglichen Flugpläne entsprechend der Korrekturaktion, die einer Gruppe von vorbestimmten und durch den Piloten veränderbaren Kriterien entspricht, wobei die Berechnung auf der Grundlage einer Navigationsdatenbasis in den Speichern (3) und von Daten durchgeführt wird, die von den Einrichtungen an Bord geliefert werden;
- auf dem Bildschirm (11) wird eine Navigationskarte angezeigt;
- auf der Navigationskarte werden die möglichen Flugpläne in Verbindung den Kriterien angezeigt, die zu ihrer Auswahl als mögliche Lösung geführt haben;
- auf Wunsch werden genauere Informationen eines von Pilot bezeichneten Flugplans unter den möglichen und in der Navigationskarte auf dem Bildschirm (11) angezeigten Lösungen dargestellt.

3. Verfahren nach Anspruch 1, **dadurch gekennzeichnet, daß** die Korrekturoperationen aus einer Umleitung, d.h. einem Wechsel des Zielflugplatzes bestehen, was mit einer Änderung des seitlichen Flugplans und einer eventuellen Änderung des Flugprofils in vertikaler Richtung einhergeht, wobei das Ereignis der Erfassung eines Schlechtwetterphänomens, einer schwerwiegenden Panne des Flugzeugs oder auch einem Problem des Zielflugplatzes, der Luftkontrolle oder der Fluggäste entspricht.

4. Verfahren nach Anspruch 2 oder 3, **dadurch gekennzeichnet, daß** außerdem gemäß einem ersten Genauigkeitsniveau signifikante Parameter angezeigt werden, die zur Auswahl oder Nichtauswahl einer möglichen Lösung eines Flugplans oder eines Flugplatzes geführt haben, der vorher vom Pilot in der Darstellung der möglichen Flugpläne bezeichnet wurde.

5. Verfahren nach Anspruch 4, **dadurch gekennzeichnet, daß** außerdem gemäß einem zweiten Genauigkeitsniveau alle Informationen betreffend einen vom Pilot vorher bezeichneten Flugplatz angezeigt werden.

6. Verfahren nach einem der vorstehenden Ansprüche, **dadurch gekennzeichnet, daß** außerdem gemäß einem zweiten Genauigkeitsniveau alle vom System für die Bestimmung der möglichen Flugpläne berücksichtigten Daten angezeigt werden.

7. Verfahren nach einem der vorstehenden Ansprüche,
**dadurch gekennzeichnet, daß** mögliche Flugpläne in Echtzeit abhängig von den von den Bordeinrichtungen oder vom Boden kommenden Informationen aktualisiert werden.

8. Verfahren nach einem der vorstehenden Ansprüche, **dadurch gekennzeichnet, daß** jeder mögliche Flugplan einer Umleitung unter Verwendung der Segmente von Flugstrecken und unter Berücksichtigung der Prozeduren bei der Annäherung an den entsprechenden Ausweichflugplatz und beim Eintreffen dort berechnet wird.

9. Verfahren nach einem der vorstehenden Ansprüche, **dadurch gekennzeichnet, daß** außerdem dem Pilot der Entscheidungspunkt entsprechend dem letzten Punkt des aktiven Flugplans angezeigt wird, an dem der neue Flugplan aktiviert werden muß, sowie die Zeit und die Entfernung bis zu diesem Punkt.

10. Verfahren nach einem der vorstehenden Ansprüche, **dadurch gekennzeichnet, daß** im Fall von mehreren Störereignissen die entsprechenden Korrekturoperationen nach Prioritätsrängen bestimmt und bearbeitet werden.

11. Verfahren nach einem der vorstehenden Ansprüche, **dadurch gekennzeichnet, daß** die Analyse der Umleitungsflugpläne auf Ausweichflugplätze beschränkt ist, die sich in einer vordefinierten Suchzone befinden, deren Lage und Ausdehnung vom Pilot verändert werden können.

12. Verfahren nach Anspruch 11, **dadurch gekennzeichnet, daß** die Lage und die Ausdehnung der vordefinierten Suchzone von den Korrekturaktionen abhängen.

13. Verfahren nach einem der vorstehenden Ansprüche, **dadurch gekennzeichnet, daß** es die Einordnung der möglichen Flugpläne abhängig von mindestens einem Optimierungskriterium enthält.

14. Verfahren nach einem der vorstehenden Ansprüche, **dadurch gekennzeichnet, daß** eine Vergleichstabelle (32) angezeigt wird, die die Werte der signifikanten Parameter des aktiven Flugplans und der möglichen Flugpläne enthält.

15. Verfahren nach einem der vorstehenden Ansprüche, **dadurch gekennzeichnet, daß** das Steuerorgan Veränderungen der Parameter eines möglichen Flugplans berücksichtigt, die vom Pilot veranlaßt wurden.

16. Verfahren nach einem der vorstehenden Ansprüche, **dadurch gekennzeichnet, daß** das Steuerorgan die Löschung eines möglichen Flugplans berücksichtigt, die vom Pilot veranlaßt wurde.

17. Verfahren nach einem der vorstehenden Ansprüche, **dadurch gekennzeichnet, daß** das System einen vom Pilot bestätigten möglichen Flugplan an eine Autopilot-Vorrichtung (14) zur Implementierung übermittelt.
